# EUROPEAN PATENT APPLICATION

(11) **EP 4 202 918 A1**
(43) Date of publication of application: **28.06.2023**
(21) Application number: 21857403.6
(22) Date of filing: 09.07.2021
(51) Int. Cl.: G10K 11/16, G10K 11/178, B61C 17/04

(54) **ACTIVE NOISE REDUCTION METHOD FOR RAIL TRANSIT VEHICLE AND CAB**

(30) Priority: 21.08.2020 CN 202010851986
(71) Applicant: CRRC Zhuzhou Locomotive Co., Ltd., Zhuzhou, Hunan 412001 (CN)
(72) Inventor: JIANG, Zhongcheng, Zhuzhou, Hunan 412001 (CN); WANG, Xianfeng, Zhuzhou, Hunan 412001 (CN); LIU, Xiaobo, Zhuzhou, Hunan 412001 (CN); LI, Dengke, Zhuzhou, Hunan 412001 (CN); ZHANG, Jun, Zhuzhou, Hunan 412001 (CN); GUO, Bingbin, Zhuzhou, Hunan 412001 (CN); HE, Huiyong, Zhuzhou, Hunan 412001 (CN); LI, Wang, Zhuzhou, Hunan 412001 (CN)
(74) Representative: Ran, Handong
(86) International application number: PCT/CN2021/105377
(87) International publication number: WO 2022/037308

(57) **Abstract**

An active noise reduction method for a rail transit vehicle and a cab. Structure noise transmission channels of the cab are installed with accelerometers, and air noise transmission channels are installed with microphones; the cab is internally installed with a plurality of secondary sound sources; and the accelerometers, microphones, and secondary sound sources are all electrically connected to an active noise adaptive controller. The method is fused with multi-reference sensor information of the cab, and is able to improve the comprehensiveness and accuracy of reference signal sources, effectively increase the amount of noise reduction in a target noise reduction region, and has a better noise reduction experience and engineering practicability.

## Description

### FIELD OF THE INVENTION

The present invention relates to the field of rail transit, in particular to an active noise reduction method for a rail transit vehicle and a cab.

### BACKGROUND OF THE INVENTION

With the increasing requirements for riding comfort of rail vehicles, drivers and passengers also have higher requirements for interior noise reduction. Because a driver needs to drive for a long time, when a cab is noisy, the driver is prone to driving fatigue and even hearing loss. At present, passive sound insulation and sealing of noisy device are mostly used to reduce noise in cabs. However, these manners are helpless for low-frequency noise. The emergence of active noise control technology provides a feasible method for low-frequency noise reduction in cabs. However, due to the complex and changeable line environment in the cab, it is difficult to obtain accurate reference signals, which leads to a poor effect on active noise reduction. In addition, the installation of an error sensor and a secondary sound source makes a seat structure complicated and inconvenient for engineering application.

### SUMMARY OF THE INVENTION

Aiming at the deficiencies of the prior art, the technical problem to be solved by the present invention is to provide an active noise reduction method for a rail transit vehicle and a cab, which obtain accurate reference signals to improve the active noise reduction effect.

In order to solve the above technical problem, the technical solution adopted by the present invention is as follows: an active noise reduction method for a rail transit vehicle includes the following steps:
1) obtaining a noise reference signal of each noise transmission channel in a cab, calculating a frequency domain signal of the noise reference signal, and obtaining a spectrum - amplitude curve of each noise reference signal by using the frequency domain signal, the noise reference signals including a structure noise reference signal and an air noise reference signal;
2) obtaining a weighting coefficient of the noise reference signal under different vehicle speed levels according to a correlation between the noise reference signal and an air noise monitoring signal near a driver's ear position;
3) selecting, according to a vehicle speed, the weighting coefficient of the noise reference signal at the corresponding vehicle speed level, and performing weighted fusion calculation on the spectrum - amplitude curve of each noise reference signal to obtain a spectrum - amplitude curve of an integrated reference signal; obtaining a noise error signal of each virtual error microphone in the cab, calculating a frequency domain signal of the noise virtual error signal, and obtaining a spectrum - amplitude curve of each noise virtual error signal by using the frequency domain signal; and
4) generating a secondary sound source control signal according to the spectrum - amplitude curve of the integrated reference signal and the spectrum - amplitude curve of the noise virtual error signal, adaptively adjusting the secondary sound source control signal to obtain an amplitude adjustment amount and phase adjustment amount of each loudspeaker signal in the cab, and adjusting the amplitude and phase of each loudspeaker signal according to the amplitude adjustment amount and phase adjustment amount of each loudspeaker signal.

In the present invention, the cab structure noise reference signal and air noise reference signal, which cover noise signals of each frequency range, are obtained, thereby improving the comprehensiveness and accuracy of reference signals. Weighted fusion calculation is performed on the spectrum - amplitude curve of each noise reference signal to obtain an accurate spectrum - amplitude curve of the integrated reference signal, and an adjustment amount is obtained by using secondary sound source control signals, so the method of the present invention can accurately calculate a required noise reduction amount (that is, the amplitude adjustment amount and phase adjustment amount of each secondary sound source signal), which greatly improves the noise reduction control effect.

In step 1), the structure noise reference signal is an accelerometer signal; the air noise reference signal is a microphone signal; the accelerometer signal is obtained by a reference accelerometer installed on a structure noise transmission channels (i.e., structure noise transmission paths) of the cab; and the microphone signal is obtained by a reference microphone installed on an air noise transmission channel (i.e., an air noise transmission path) of the cab. Multiple kinds of reference sensor information are fused to improve the comprehensiveness and accuracy of reference signal sources.

In step 1), the process of obtaining a spectrum - amplitude curve of each noise reference signal includes: performing fast Fourier transformation on each noise reference signal to obtain a frequency domain signal, taking a one-third octave and performing A-weighting to obtain the spectrum - amplitude curve. The calculation process greatly improves the calculation speed. Meanwhile, the one-third octave can ensure the calculation accuracy, and the A-weighting ensures the correlation between the reference signals and the sensitivity of human ears to acoustic signals.

In step 2), the air noise monitoring signal near the driver's ear position is obtained by a microphone installed near the driver's ear position, and the driver's ear position is obtained by a position tracking sensor installed at the middle part of a window in front of the driver for tracking the position of the driver's head. The position tracking sensor may be a camera, an infrared camera, etc.

In step 4), the secondary sound source control signal is adaptively adjusted by using acoustic signals of the virtual error microphone; and the acoustic signals of the virtual error microphone are obtained by a plurality of microphones installed on a ceiling or side wall of the cab, or by physical error microphones installed on a cab seat. The physical error microphones are directly installed on the cab seat, which omits a plurality of microphones, does not need to establish a transfer function between a microphone and a virtual microphone in advance, and does not need a position tracking sensor, so the structure is relatively simple and engineering applications are facilitated.

In step 4), the specific implementation process of adaptively adjusting the secondary sound source control signal includes: taking the acoustic signals of the virtual error microphone and the secondary sound source control signal as the input of the active noise reduction method, and iteratively adjusting a calculation step size and a calculation order; and when the active noise reduction method converges, ending the adaptive adjustment, and outputting the amplitude adjustment amount and phase adjustment amount of each loudspeaker signal. The adjustment process is simple and easy to implement, and the adjustment result is accurate.

The loudspeaker is installed in an area where the sound pressure in the cab is more than 68 dB(A), which can stimulate modal response of a cab cavity and effectively reduce the noise amplitude of a target area (the driver's ear area) at typical frequencies.

As an inventive concept, the present invention further provides a cab of a rail transit vehicle. An accelerometer is installed on each structure noise transmission channel in the cab, and a microphone is installed on each air noise transmission channel; a plurality of secondary sound sources are installed in the cab; the accelerometers, the microphones, and the secondary sound sources are all electrically connected with an active noise adaptive controller; and the active noise adaptive controller is configured to execute the steps of the above-mentioned method. Various reference sensors are installed in the cab of the present invention, which can accurately obtain noise signals of each frequency range.

The plurality of secondary sound sources are installed on a ceiling and a side wall in the cab respectively; or the plurality of secondary sound sources are installed on a cab seat. A plurality of remote error microphones are installed on the ceiling or side wall of the cab; or physical error microphones are installed on the cab seat. A position tracking sensor for tracking the position of the driver's head is installed at the middle part of a front window of the cab.

Compared with the prior art, the present invention has the following beneficial effects:
1. The fusion of multi-reference sensor information in the present invention improves the comprehensiveness and accuracy of reference signal sources, the accuracy of reference signals effectively increases the noise reduction amount of a target noise reduction area, and the method has a good noise reduction effect and engineering practicability.
2. The virtual error microphone reduces the complexity of the driver's seat, and improves the adjustment operability and the driver's use convenience.

### BRIEF DESCRIPTION OF THE DRAWINGS

FIG. 1 is a schematic diagram of an active noise reduction device for a rail vehicle cab using multi-reference sensor information fusion and mobile virtual error microphone technologies according to an embodiment of the present invention;
FIG. 2 is a schematic diagram of an active noise reduction device for a rail vehicle cab using multi-reference sensor information fusion and virtual error microphone technologies according to an embodiment of the present invention;
FIG. 3 is a schematic diagram of an active noise reduction device for a rail vehicle cab using multi-reference sensor information fusion and far-field loudspeaker area control technologies according to an embodiment of the present invention; and
FIG. 4 is a schematic diagram of an active noise reduction device for a rail vehicle cab using multi-reference sensor information fusion technology according to an embodiment of the present invention.

### DETAILED DESCRIPTION OF THE EMBODIMENTS

In the present invention, structure noise refers to noise generated by metal vibration, with frequency generally less 400 Hz, and the structure noise signals are obtained by accelerometers. Air noise refers to noise caused by sound transmission in air, with frequency generally more than 400 Hz, and air noise signals are obtained by microphones.

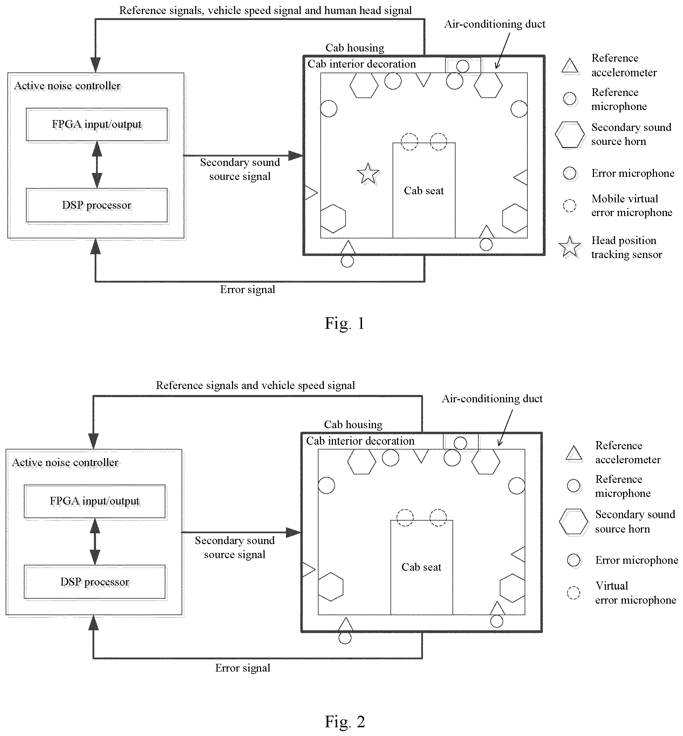

As shown in FIG. 1, in Embodiment 1 of the present invention, in view of complex and all-directional noise sources of a rail vehicle cab, reference accelerometers and reference microphones are installed outside the cab, on a wall plate of a cab housing, between the wall plate of the cab housing and a cab interior decoration, and on a wall plate of the a cab interior decoration and an air outlet of an air-conditioning duct, and are used for obtaining reference acceleration signals and reference microphone signals and performing spectral analysis and weighted fusion on each reference signal to obtain an accurate integrated reference signal.

The installation positions of reference sensors are as follows: a reference microphone is installed under the floor of the cab housing, reference accelerometers are installed on the floor and side wall of the inner surface of the cab housing, a microphone is installed between the floor of the cab housing and the floor of the cab interior decoration, reference accelerometers are installed on the floor, side wall and an inner surface of a top cover of the cab interior decoration, and a reference microphone is installed at an air outlet of an air conditioning duct.

Spectral analysis on each reference signal refers to extracting spectrum - amplitude feature data of each reference signal. That is, respectively performing fast Fourier transformation (FFT) on time-domain acceleration reference signals and time-domain microphone reference signals in a band or a sampling period to obtain corresponding frequency domain signals, taking a one-third octave and performing A-weighting (the A-weighting sound level is the loudness of 40 phon of pure tone perceived by the human ear, and when signals passes, their low frequency and intermediate frequency (below 1000 Hz) are greatly attenuated) to obtain corresponding spectrum - amplitude curves. The spectrum - amplitude curves are curves with the one-third octave as abscissa and a corresponding acceleration level amplitude curve or sound pressure level amplitude curve as ordinate.

In the weighted fusion calculation, a correlation coefficient of each reference signal of the cab and a microphone signal at a driver's ear position under different vehicle speed levels is obtained by performing FFT on a single reference signal and a microphone signal at driver's ear position to obtain two frequency domain signals, and by performing coherence/correlation function analysis on the two frequency domain signals (such as analysis in MATLAB) to obtain a coherence/correlation coefficient, and then normalization (summing the correlation coefficients of reference signals, and then dividing each correlation coefficient by the sum) is performed to obtain a weighting coefficient of each reference signal.

In a process of active noise control, a vehicle speed signal in a vehicle control system of the cab is extracted, the weighting coefficient of each reference signal under the corresponding vehicle speed level is selected, and weighting calculation is performed on the spectrum - amplitude curve of each reference signal to obtain a spectrum - amplitude curve of the integrated reference signal (the calculation process of the spectrum - amplitude curve refers to the invention patent application with the publication number CN109405961A).

Correlation coefficient is a statistical index that reflects the closeness between variables, and the correlation coefficient ranges from 1 to -1. The value 1 indicates that two variables are completely linearly correlated, the value -1 indicates that two variables are completely negatively correlated, and 0 indicates that two variables are not correlated. If the correlation coefficient is closer to 0, the correlation is weaker.

In view of the fact that a secondary sound source horn and an error microphone are installed on a seat, which increases the complexity of the seat and is inconvenient for the adjustment of the driver's seat, and in order to adapt to the movement of the driver's head and the change of the driver's height, a mobile virtual error microphone is used to obtain error signals near the driver's ears (0.1 m away from the driver's ear position and 1.2 m away from the floor).

Remote error microphones are installed on the ceiling and side wall of the cab, and a transfer function between the remote microphones and the left and right ear microphones at the artificial head on the driver's seat when the artificial head is in different position areas is obtained in advance in the cab environment, so that acoustic signals of the mobile virtual error microphone can be calculated from acoustic signals of a plurality of remote microphones (see: Acta Physica Sinica, vol. 68, No. 5, A review of research on active noise control near human ear in complex sound field).

The number of remote error microphones is determined according to the acoustic signal prediction accuracy and economic cost of the mobile virtual error microphone (that is the number of microphones used when the prediction accuracy meets the minimum control requirements, for example, the accuracy of predicting acoustic signals at one position with five remote microphones is higher than that with three remote microphones, but the economic cost of the five microphones is higher; when the prediction accuracy with three remote microphones meets the minimum accuracy requirements, three remote microphones are used because the cost when using three microphones is low).

In practical applications, the driver's head position is obtained by a head position tracking sensor installed at the middle part of a window in front of the driver (i.e., a sensor for obtaining the driver's head position, such as https://baike.so.com/doc/6436712-6650392.html).

The position tracking sensor may also be a camera, an infrared camera, etc.

An active noise adaptive controller adopts a multi-channel active feedforward system. Secondary sound source control signals are generated according to reference signals, then adaptive adjustment and control are performed on the secondary sound source control signals according to the signals of the mobile virtual error microphone (see: Acta Physica Sinica, vol. 68, No. 5, A review of research on active noise control near human ear in complex sound field), and an output amplitude adjustment amount and phase adjustment amount of each loudspeaker signal are obtained. In the adaptive adjustment and control, parameters of an active noise reduction algorithm, including calculation step size and an order, etc, is adaptively changed according to the real-time changes of external reference signals and feedback signals (i.e., error signals) (see: Science Technology and Engineering, vol. 18, No. 35, Low Frequency Noise Reduction in Closed Spaces Based on Multi-channel Active Noise Control System; or, Multi-Channel Adaptive Filter-X LMS Algorithm Block Diagram, Wang Chunyun, et al.), thereby optimizing the convergence speed of the algorithm and obtaining an optimal and stable output signal of a secondary loudspeaker, so as to weaken original sound field signals near the driver's ears and achieve the purpose of reducing the original sound field. When the adaptive adjustment is performed, a secondary sound source also outputs signals, and when the convergence and stability are achieved, that is, when the error signal monitored by an error sensor is less than a limit value, the output value of the secondary sound source is not adjusted but the current output value is maintained; and when the error microphone monitors an error signal exceeding the limit value due to the change of the external environment, the adaptive adjustment algorithm is started again for a new round of adjustment. By cyclic iteration, the monitoring value of the mobile virtual error microphone quickly converges to a target limit value. That is, by cyclic iteration of inputs and outputs within a few continuous sampling periods under external instantaneous and steady-state conditions, the value of the virtual error microphone in a target area decreases gradually. When the value of the virtual error microphone in a target area is less than a target limit value, it indicates that the control has converged. The target limit value is theoretically 0, but in practice, due to interference and device limitations, the noise cannot be cancelled to 0, so a relative small value is set as the convergence value of the algorithm control, such as 0.005. Multi-channel refers to a plurality of secondary sound sources. The secondary sound source is a loudspeaker or a horn. The number and arrangement positions of the secondary sound sources are obtained in advance by sound field simulation optimization. A typical frequency and its sound field distribution are obtained according to sound field modal simulation, and a loudspeaker is arranged in an area with high sound pressure (with the range of above 68 dB (A)) according to the sound field distribution of the typical frequency, which can effectively reduce the noise amplitude in the area at the frequency and can be verified by experiments. In the experiments, the loudspeaker is placed at a simulation position and the frequency noise is radiated to verify the noise reduction effect; and whether the noise reduction amount on other positions is less than the noise reduction amount found in the simulation optimization at the position is tested when the frequency noise is radiated, thereby verifying that placing the loudspeaker at the simulation position will achieve the optimal noise reduction effect.

In the active noise reduction device for a rail vehicle cab, an FPGA system is used for the input and output of the active noise controller, and a digital signal processor (DSP) is used as the calculation core.

In Embodiment 2 of the present invention, as shown in FIG. 2, the virtual error microphone is immobile, and the head position tracking sensor is omitted.

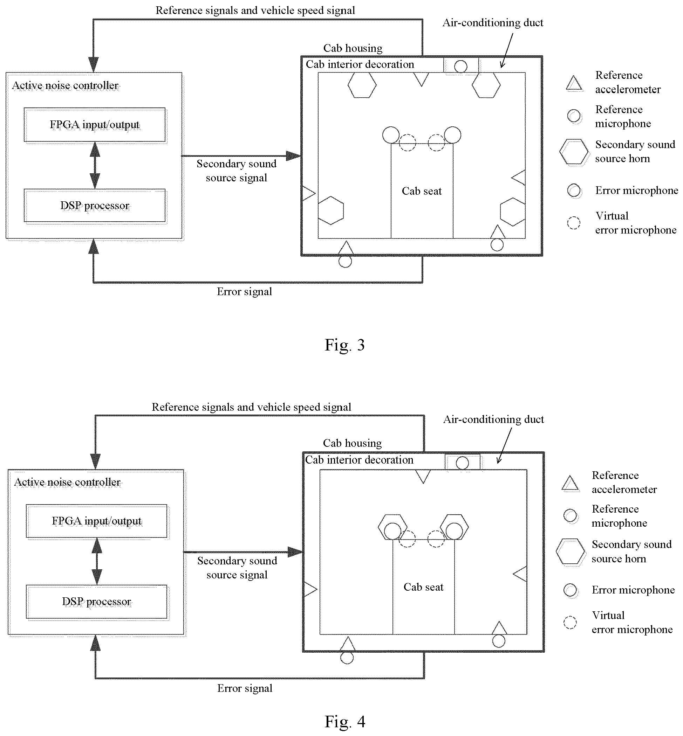

In Embodiment 3 of the present invention, as shown in FIG. 3, a remote error microphone is installed on a cab seat. Using one error microphone can reduce the number of remote error microphones and improve the calculation accuracy of virtual error microphone signals. In Embodiment 3, the head position tracking sensor is not required.

In Embodiment 4 of the present invention, as shown in FIG. 4, two secondary sound sources and two error microphones are installed on a driver's seat, which improves the calculation accuracy of virtual error microphone signals, reduces the transmission distance of the secondary sound sources, and improves the frequency range and control accuracy of the secondary sound sources. However, the secondary sound sources are installed on the seat, which increases the complexity of the seat and the size of a seat headrest, so that the seat needs to be customized. The method for obtaining reference signals is the same as that in Embodiment 1.

Practice has proved that the accuracy of reference signals effectively increases the noise reduction amount in a target noise reduction area, and the method has a good noise reduction effect and engineering practicability.

In Embodiment 5 of the present invention, an accelerometer is installed on each structure noise transmission channel of a cab of a rail transit vehicle, and a microphone is installed on each air noise transmission channel; a plurality of secondary sound sources are installed in the cab; and the accelerometers, the microphones, and the secondary sound sources are all electrically connected to an active noise adaptive controller.

Specifically, a reference microphone is installed under the floor of a cab housing, reference accelerometers are installed on the floor and side wall of the inner surface of the cab housing, a microphone is installed between the floor of the cab housing and the floor of a cab interior decoration (inner cab wall), reference accelerometers are installed on the floor, side wall and an inner surface of a top cover of the cab interior decoration, and a reference microphone is installed at an air outlet of an air conditioning duct.

As shown in FIGS. 1, 2 and 3, a plurality of secondary sound sources are installed on the ceiling and side wall of the cab respectively, and a plurality of remote microphones are installed on the ceiling or side wall of the cab. As shown in FIG. 4, a plurality of secondary sound sources may also be installed on the cab seat, and a physical error microphone is installed on the cab seat.

A position tracking sensor, such as a camera, for tracking the position of the driver's head is installed at the middle part of a front window of the cab.

## Claims

1. An active noise reduction method for a rail transit vehicle, comprising the following steps:
1) obtaining a noise reference signal of each noise transmission channel in a cab, calculating a frequency domain signal of the noise reference signal, and obtaining a spectrum-amplitude curve of each noise reference signal using the frequency domain signal, the noise reference signals comprising a structure noise reference signal and an air noise reference signal;
2) obtaining a weighting coefficient of the noise reference signal under different vehicle speed levels according to a correlation between the noise reference signal and an air noise monitoring signal near a driver's ear position;
3) selecting, according to a vehicle speed, the weighting coefficient of the noise reference signal at the corresponding vehicle speed level, and performing weighted fusion calculation on the spectrum - amplitude curve of each noise reference signal to obtain a spectrum - amplitude curve of an integrated reference signal; obtaining a noise virtual error signal of each virtual error microphone in the cab, calculating a frequency domain signal of the noise virtual error signal, and obtaining a spectrum - amplitude curve of each noise virtual error signal by using the frequency domain signal; and
4) generating a secondary sound source control signal according to the spectrum - amplitude curve of the integrated reference signal and the spectrum - amplitude curve of the noise virtual error signal, adaptively adjusting the secondary sound source control signal to obtain an amplitude adjustment amount and phase adjustment amount of each loudspeaker signal of the cab, and adjusting the amplitude and phase of each loudspeaker signal according to the amplitude adjustment amount and phase adjustment amount of each loudspeaker signal.

2. The active noise reduction method for a rail transit vehicle according to claim 1, wherein in step 1):
the structure noise reference signal is an accelerometer signal;
the air noise reference signal is a microphone signal;
the accelerometer signal is obtained by a reference accelerometer installed on a structure noise transmission channel in the cab; and
the microphone signal is obtained by a reference microphone installed on an air noise transmission channel in the cab.

3. The active noise reduction method for a rail transit vehicle according to claim 1, wherein in step 1), the process of obtaining a spectrum-amplitude curve of each noise reference signal comprises:
performing fast Fourier transformation on each noise reference signal to obtain a frequency domain signal; and
taking a one-third octave and performing A-weighting to obtain the spectrum-amplitude curve.

4. The active noise reduction method for a rail transit vehicle according to claim 1, wherein in step 2):
the air noise monitoring signal near the driver's ear position is obtained by a microphone installed near the driver's ear position; and
the driver's ear position is obtained by a position tracking sensor installed at a middle part of a window in front of the driver.

5. The active noise reduction method for a rail transit vehicle according to claim 1, wherein in step 4);
the secondary sound source control signal is adaptively adjusted by using acoustic signals of the virtual error microphone; and
the acoustic signals of the virtual error microphone are obtained by a plurality of remote error microphones installed on a ceiling or side wall of the cab, or by an error microphone installed on a cab seat.

6. The active noise reduction method for a rail transit vehicle according to claim 4, wherein the specific implementation process of adaptively adjusting the secondary sound source control signal comprises:
taking the acoustic signals of the virtual error microphone and the secondary sound source control signal as the input of the active noise reduction method, and adjusting a calculation step size and a calculation order;
when the virtual error signal is smaller than a set limit value, ending the adaptive adjustment, without causing the output of the amplitude adjustment amount and phase adjustment amount of each loudspeaker signal to be changed; and
when the virtual error signal exceeds the set limit value due to the change of an external environment, starting the active noise reduction method again to change the output signal of each loudspeaker.

7. The active noise reduction method for a rail transit vehicle according to one of claims 1-6, wherein the loudspeaker is installed in an area in the cab where a sound pressure is higher than 68 dB(A).

8. A cab of a rail transit vehicle, wherein:
a reference accelerometer is installed on each structure noise transmission channel in the cab, and a reference microphone is installed on each air noise transmission channel;
a plurality of secondary sound sources are installed in the cab;
a plurality of remote error microphones are installed on a ceiling or side wall of the cab;
the reference accelerometers, the reference microphones, the secondary sound sources, and the remote error microphones are all electrically connected with an active noise adaptive controller; and
the active noise adaptive controller is configured to execute the steps of the active noise reduction method according to any one of claims 1-7.

9. The cab of the rail transit vehicle according to claim 8, wherein:
the plurality of secondary sound sources are installed on the ceiling and the side wall in the cab respectively, or on a cab seat; and preferably,
at least one remote error microphone is installed on the cab seat.

10. The cab of the rail transit vehicle according to claim 8 or 9, wherein:
a position tracking sensor for tracking the position of the driver's head is installed at a middle part of a front window of the cab; and preferably,
a plurality of loudspeakers are installed in an area in the cab where a sound pressure is more than 68 dB(A).
